Europäisches Patentamt

European Patent Office

Office européen des brevets

(11) Numéro de publication : **0 564 349 A1**

## (12) DEMANDE DE BREVET EUROPEEN

(21) Numéro de dépôt : **93400810.3**

(22) Date de dépôt : **29.03.93**

(51) Int. Cl.⁵ : **H04B 10/06**

(30) Priorité : **03.04.92 FR 9204111**

(43) Date de publication de la demande :
**06.10.93 Bulletin 93/40**

(84) Etats contractants désignés :
**DE GB IT**

(71) Demandeur : **AUTOMOBILES PEUGEOT**
**75, avenue de la Grande Armée**
**F-75116 Paris (FR)**

(71) Demandeur : **AUTOMOBILES CITROEN**
**62 Boulevard Victor-Hugo**
**F-92200 Neuilly-sur-Seine (FR)**

(72) Inventeur : **Fromion, Alexandre**
**6, rue Marin la Meslée**
**F-92160 Antony (FR)**

(74) Mandataire : **Habasque, Etienne Joel**
**Jean-François et al**
**Cabinet Lavoix 2, Place d'Estienne d'Orves**
**F-75441 Paris Cédex 09 (FR)**

(54) **Dispositif de réception d'un signal optique, notamment pour véhicule automobile.**

(57) Ce dispositif, du type comportant un capteur photo-électrique (6) délivrant un signal électrique représentatif du signal optique reçu et un amplificateur (2) du signal de sortie de ce capteur, est caractérisé en ce qu'il comporte en outre un intégrateur (3), dont l'entrée est connectée à la sortie de l'amplificateur (2) et dont la sortie est reliée à des moyens de soustraction (1) du signal de sortie de cet intégrateur (3), du signal de sortie du capteur photo-électrique (6) pour éliminer les parasites de basse fréquence de ce signal, la sortie de ces moyens de soustraction (1) étant reliée à l'entrée de l'amplificateur (2).

FIG·2

EP 0 564 349 A1

La présente invention concerne un dispositif de réception d'un signal optique, notamment pour véhicule automobile.

Plus particulièrement, le dispositif selon l'invention peut être utilisé pour la réception d'un signal optique, par exemple infrarouge, de commande à distance du fonctionnement d'un organe d'un véhicule automobile, d'un récepteur de télévision ou autre.

Ces dispositifs comportent de manière générale un capteur photo-électrique permettant de convertir des informations codées optiques reçues en un signal électrique représentatif de ce signal optique.

Le signal de sortie de ce capteur photo-électrique est ensuite appliqué à l'entrée d'un amplificateur dont la sortie délivre un signal d'informations codé.

Cependant, le fonctionnement de ces dispositifs peut être perturbé par la luminosité ambiante par exemple solaire ou un rayonnement de lampes fluorescentes ou à incandescence.

En effet, le dispositif se sature très rapidement à cause du courant parasite très important engendré par les perturbations lumineuses dans un rapport de 1 à 10000 entre les informations codées et le bruit lumineux.

Le but de l'invention est donc de résoudre ces problèmes en proposant un dispositif qui soit simple et fiable.

A cet effet, l'invention a pour objet un dispositif de réception d'un signal optique, notamment pour véhicule automobile, du type comportant un capteur photo-électrique délivrant un signal électrique représentatif du signal optique reçu et un amplificateur du signal de sortie de ce capteur, caractérisé en ce qu'il comporte en outre un intégrateur dont l'entrée est connectée à la sortie de l'amplificateur et dont la sortie est reliée à des moyens de soustraction du signal de sortie de cet intégrateur, du signal de sortie du capteur photo-électrique, qui délivrent un signal de correction vers la masse, pour éliminer les parasites de basse fréquence de ce signal, la sortie de ces moyens de soustraction étant reliée à l'entrée de l'amplificateur.

L'invention sera mieux comprise à l'aide de la description qui va suivre, donnée uniquement à titre d'exemple et faite en se référant aux dessins annexés, sur lesquels :

- la Fig.1 représente un schéma synoptique illustrant le fonctionnement d'un partie d'un dispositif selon l'invention;
- la Fig.2 représente un schéma synoptique plus détaillé illustrant le fonctionnement d'un dispositif selon l'invention;
- la Fig.3 représente un schéma électrique d'un mode de réalisation d'un dispositif selon l'invention.
- les Fig.4,5 et 6 représentent différents diagrammes de BODE illustrant le fonctionnement d'un dispositif selon l'invention; et

- la Fig.7 représente différentes formes de signaux en différents points du dispositif selon l'invention.

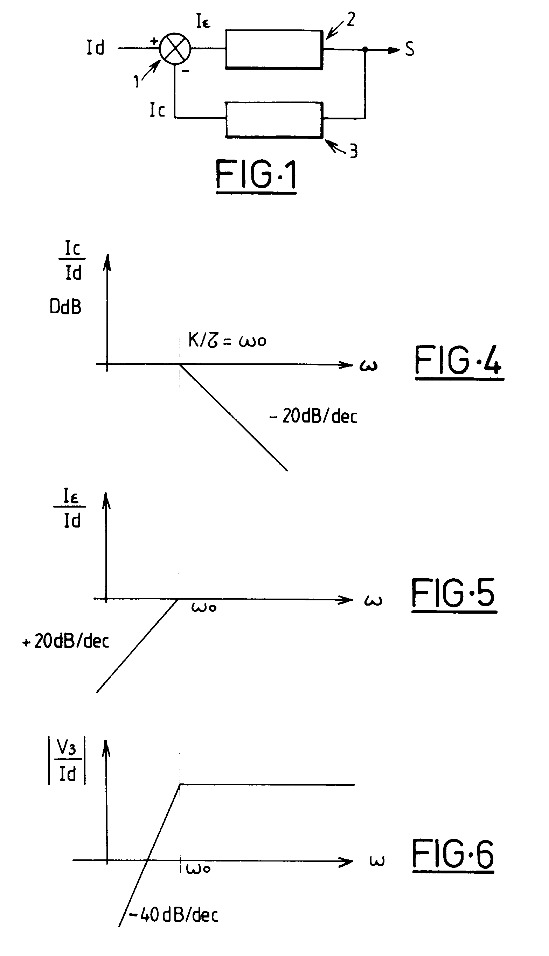

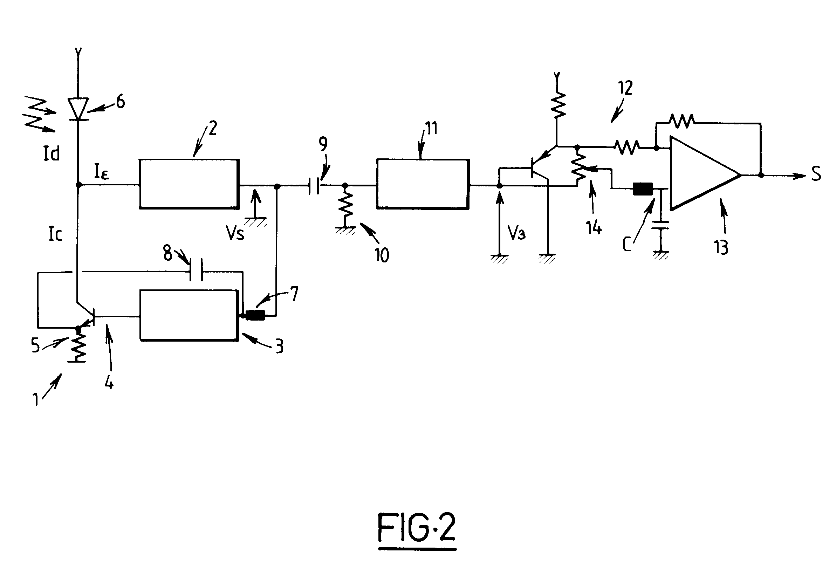

Sur la Fig.1, Id représente le signal électrique représentatif du signal optique reçu par un capteur photo-électrique non représenté sur cette figure.

Ce signal électrique Id contient donc à la fois le signal utile, c'est à dire l'image électrique du flux lumineux d'informations émis par une source de type connu et des parasites qui sont en fait des parasites de basse fréquence représentant l'image électrique du bruit lumineux perturbateur engendré par exemple par le soleil et le rayonnement de lampes de l'environnement du capteur.

Ce signal Id délivré par exemple par un capteur photo-électrique du type photodiode, est appliqué à l'entrée positive de moyens de soustraction 1 recevant sur une entrée négative un signal Ic qui sera décrit plus en détail par la suite et qui sera appelé signal de correction.

Le signal d'erreur $I_\varepsilon$ de sortie de ces moyens de soustraction, est appliqué à l'entrée d'un amplificateur 2.

La sortie de l'amplificateur 2 est reliée à l'entrée d'un intégrateur 3 dont la sortie délivre le signal Ic mentionné précédemment, appliqué à l'entrée négative des moyens de soustraction 1.

On conçoit donc que le dispositif selon l'invention comporte un intégrateur 3 dont l'entrée est connectée à la sortie de l'amplificateur 2 et dont la sortie est reliée à des moyens de soustraction du signal Ic de sortie de cet intégrateur, du signal Id de sortie du capteur photo-électrique, pour éliminer les parasites de basse fréquence de ce signal.

Comme on peut le constater en particulier sur les Fig.2 et 3, les moyens de soustraction 1 sont en fait basés sur l'utilisation d'un transistor NPN 4 dont l'émetteur est relié à la masse à travers une résistance 5 et dont le collecteur est relié à l'entrée de l'amplificateur 2, de même que la sortie du capteur photo-électrique constitué, dans l'exemple de réalisation, par une photodiode 6.

La base du transistor 4 est reliée à la sortie de l'intégrateur 3.

Cet intégrateur présente une résistance d'entrée 7 raccordée à la sortie de l'amplificateur 2 et un condensateur 8 connecté entre l'entrée de cet intégrateur et l'émetteur du transistor 4.

L'amplificateur 2 est réalisé en utilisant des transistors, de façon classique.

La sortie de cet amplificateur 2 est également reliée à une borne d'un autre condensateur 9 dont l'autre borne est reliée à la masse à travers une résistance 10. Le point commun entre le condensateur 9 et la résistance 10 est relié à des moyens d'amplification 11 comportant un ou plusieurs étages d'amplification à transistors.

Des moyens à seuil de déclenchement classiques désignés de façon générale par la référence 12 sur ces figures 2 et 3, sont également prévus pour garantir un seuil de déclenchement constant quelles que soient les fluctuations moyennes du signal.

Le signal de sortie de ces moyens à seuil de déclenchement est ensuite injecté dans un comparateur à hystérésis 13, à base d'amplificateur opérationnel, permettant de délivrer le signal logique de sortie S représentatif du signal optique reçu.

Un tel dispositif peut par exemple être intégré sur une pastille de silicium, ce qui permet de réduire son encombrement et d'améliorer ses performances.

Dans la suite de la description, l'amplificateur 2 de chaîne directe sera désigné par $\mu$ et l'intégrateur 3 d'élimination des parasites de basse fréquence du signal de sortie du capteur photo-électrique, sera appelé $\beta$.

Si $\mu$ est une transimpédance et $\beta$ un intégrateur, on obtient en transformée de Laplace :

$$Ic(P) \; = \; \frac{Id(P)}{1 + \dfrac{\tau}{K} p}$$

avec

$\tau$ = RC (résistance 7, condensateur 8),

K = Rf/RS (résistance de l'amplificateur 2/résistance 5), et

Ic = le courant absorbé par le transistor 4, dit de correction.

Le courant de sortie $I_\varepsilon$ des moyens de soustraction est amplifié par $\mu$.

On a alors :

$$Vs(p) \; = \; - I_\varepsilon(P) \, Rf \; = \; - \frac{Rf \, \tau/K \, p \, Id \, (p)}{1 + \tau/K \, p}$$

Le signal Vs (Fig.2) de sortie de l'amplificateur 2 recopie Id(P) aux fréquences supérieures ( à -3 dB) à fo = $\omega$0/2$\pi$ = K/2$\pi\tau$ (passe haut), voir diagramme de Bode (Fig.4 et 5).

Le signal optique utilisé dans ce type d'applications comporte en fait de façon typique des impulsions de 1 $\mu$s répétées toutes les 10 $\mu$s.

Le bruit solaire moyen est d'environ 1 mA sur le récepteur.

A titre d'exemple, on choisira RC à peu près égal à 50 ms (résistance 7, condensateur 8), Rf (résistance de l'amplificateur 2) à peu près égale à 50 K$\Omega$, $\omega$O à peu près égal à 10000 rad/s, soit fo à peu près éal à 1600 HZ et RS à peu près égal à 100 $\Omega$ (résistance 5).

Vs représente alors le signal amplifié de $I_\varepsilon$ débarrassé des perturbations.

Le couple condensateur 9 - résistance 10, (Fig.2 et 3) permet d'améliorer la réjection des bruits de basse fréquence, en augmentant la pente de la bande coupée (voir diagramme de Bode, Fig.6).

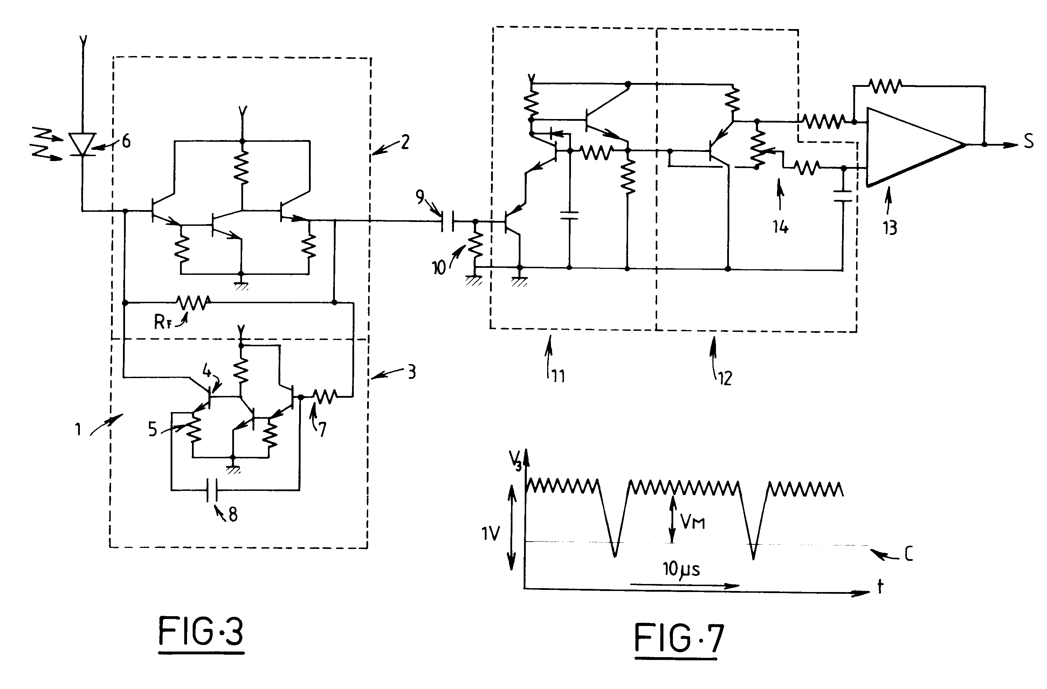

Une forme de signal typique est représentée sur la Fig.7.

Cette figure, qui représente la forme du signal V3 en sortie des moyens d'amplification 11, fait apparaître VM qui représente la marge de bruit réglée par un potentiomètre 14 des moyens à seuil de déclenchement 12 (Fig. 2 et 3).

De façon typique, VM est égal à 0,3 V pour 1 V de signal.

On conçoit donc que le dispositif selon l'invention permet d'éliminer les parasites de basse fréquence du signal délivré par le capteur photo-électrique en utilisant une contre-réaction efficace grâce à un intégrateur en courant permettant une absorption très importante des courants parasites (jusqu'à 10 mA).

Ce dispositif peut être utilisé dans tout récepteur optique en contact avec des sources intenses de perturbations lumineuses comme dans les dispositifs de commande à distance utilisés dans les véhicules automobiles pour piloter par exemple les systèmes de condamnation centralisée des ouvrants de ces véhicules ou dans les dispositifs de transmission d'informations par voie optique entre véhicules ou entre l'infrastructure routière et les véhicules.

**Revendications**

1. Dispositif de réception d'un signal optique, notamment pour véhicule automobile, du type comportant un capteur photo-électrique (6) délivrant un signal électrique représentatif du signal optique reçu et un amplificateur (2) du signal de sortie de ce capteur, caractérisé en ce qu'il comporte en outre un intégrateur (3) dont l'entrée est connectée à la sortie de l'amplificateur (2) et dont la sortie est reliée à des moyens de soustraction (1) du signal de sortie de cet intégrateur (3), du signal de sortie du capteur photo-électrique (6), qui délivrent un signal de correction (Ic) vers la masse, pour éliminer les parasites de basse fréquence de ce signal, la sortie de ces moyens de soustraction (1) étant reliée à l'entrée de l'amplificateur (2).

2. Dispositif selon la revendication 1, caractérisé en ce que la sortie de l'amplificateur (2) est reliée à une borne d'un condensateur (9) dont l'autre borne est reliée à la masse à travers une résistance (10), le point milieu entre ce condensateur et cette résistance étant relié à des moyens d'amplification (11), dont la sortie est reliée à des moyens de déclenchement à seuil (12) et à des moyens de comparaison à hystérésis (3) pour délivrer un signal de sortie logique représentatif du signal optique reçu.

3. Dispositif selon la revendication 1 ou 2, caractérisé en ce que les moyens de soustraction comprennent un transistor NPN (4) dont la base est reliée à la sortie de l'intégrateur (3), dont l'émetteur est relié à la masse à travers une résistance (5) et dont le collecteur est relié à l'entrée de l'amplificateur (2), de même que la sortie du capteur photo-électrique (6).

4. Dispositif selon l'une quelconque des revendications précédentes, caractérisé en ce que le capteur photo-électrique comporte une photodiode (6).

Id $\longrightarrow$ + $\bigotimes$ Iε $\boxed{\phantom{xxxx}}$ 2 $\longrightarrow$ S

1

Ic $\boxed{\phantom{xxxx}}$ 3

## FIG·1

$\dfrac{Ic}{Id}$

DdB

$K/Z = \omega o$

$\omega$

## FIG·4

$-20dB/dec$

$\dfrac{Iε}{Id}$

$\omega o$

$\omega$

## FIG·5

$+20dB/dec$

$\left|\dfrac{V_3}{Id}\right|$

$\omega o$

$\omega$

## FIG·6

$-40\,dB/dec$

FIG.2

EP 0 564 349 A1

**FIG·3**

**FIG·7**

EP 0 564 349 A1

Office européen
des brevets

**RAPPORT DE RECHERCHE EUROPEENNE**

Numero de la demande

EP    93 40 0810

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 098 662 (MOTOROLA)<br>* page 2, ligne 29 - ligne 33 *<br>* page 3, ligne 4 - ligne 9 *<br>* page 4, ligne 26 - ligne 36 *<br>* page 6, ligne 19 - ligne 29; figures 3-5 * | 1,3,4 | H04B10/06 |
| | --- | | |
| A | EP-A-0 292 117 (AMP)<br>* colonne 3, ligne 22 - ligne 24 *<br>* colonne 3, ligne 30 - ligne 40; figure 1 * | 2 | |
| | ----- | | |
| | | | **DOMAINES TECHNIQUES RECHERCHES (Int. Cl.5)**<br><br>H04B |

Le présent rapport a été établi pour toutes les revendications

| Lieu de la recherche | Date d'achèvement de la recherche | Examinateur |
|---|---|---|
| LA HAYE | 05 JUILLET 1993 | WILLIAMS Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8